# EUROPÄISCHE PATENTANMELDUNG

(11) **EP 0 607 517 A1**
(43) Veröffentlichungstag der Anmeldung: **27.07.1994**
(21) Anmeldenummer: 93118427.9
(22) Anmeldetag: 15.11.1993
(51) Int. Cl.: B60N 2/48

(54) **Kopfstütze für einen Kraftfahrzeugsitz**

(30) Priorität: 23.11.1992 DE 4239272
(71) Anmelder: C. Rob. Hammerstein GmbH, D-42699 Solingen (DE)
(72) Erfinder: Bauer, Heinz, D-42699 Solingen (DE); Becker, Burckhard,, D-42655 Solingen (DE); Frohnhaus, Ernst-Reiner, D-42699 Solingen (DE)
(74) Vertreter: Bauer, Wulf, Dr.

(57) **Zusammenfassung**

Kopfstütze für einen Kraftfahrzeugsitz, die aus einem Kopfteil, das einen Stützrahmen (20) und einen Polsterkörper aufweist, und einem einbeinigen, steckbaren gelenkig mit diesem Kopfteil verbundenen, in die Rückenlehne einsteckbaren Halter (36) besteht. Stützrahmen (20) und Halter (36) sind aus Leichtmetall gefertigt. Der Polsterkörper ist lösbar mit dem Stützrahmen (20) verbunden und haftet an diesem nicht. Der Halter (36) ist ein Hohlprofil mit länglichem Querschnitt.

## Beschreibung

Die Erfindung bezieht sich auf eine Kopfstütze für einen Kraftfahrzeugsitz, die aus einem Kopfteil und einem Halter besteht. Der Kopfteil setzt sich aus einem die tragende Funktion übernehmenden Stützrahmen und aus einem die Polsterung bewirkenden Polsterkörper zusammen. Der Halter ist einbeinig, kann in die Rückenlehne eines Kraftfahrzeugsitzes eingesteckt und vorzugsweise gegenüber dieser höhenverstellt werden, er ist gelenkig mit dem Kopfteil verbunden, so daß dieses in verschiedenen Winkelpositionen gegenüber dem Halter reibschlüssig einstellbar ist.

Bei Kopfstützen der eingangs genannten Art ist man bestrebt, das Gesamtgewicht möglichst gering zu halten. Dadurch kann der Gewichtsanteil, den die Kopfstützen eines Kraftfahrzeugs zum Gesamtgewicht des Kraftfahrzeugs beitragen, klein gehalten werden, was sich beim Kraftfahrzeug bekanntlich in geringerem Verbrauch, geringerer Schadstoffemission usw. widerspiegelt. Trotz des Leichtbaus muß die Kopfstütze aber ausreichend stabil sein, insbesondere unfallbedingte Kräfte aufnehmen und in die Rückenlehne des Sitzes einleiten können. Derartige Kräfte treten auf durch unfallbedingte Beschleunigung des Kopfes eines Fahrzeuginsassen gegen die Kopfstütze.

Weiterhin sollte eine Kopfstütze, wie auch andere Teile eines Kraftfahrzeugs, so konstruiert sein, daß sie möglichst einfach entsorgt werden kann. Für die Entsorgung sollten sehr einfache Handgriffe ausreichen, da eine vollständige Rückmontage viel zu kosten- und zeitaufwendig wäre.

Hier setzt nun die Erfindung ein. Sie hat es sich zur Aufgabe gemacht, die vorbekannte Kopfstütze der eingangs genannten Art dahingehend weiterzubilden, daß sie einfach entsorgbar ist, leicht baut und dennoch eine ausreichende Festigkeit aufweist.

Ausgehend von der Kopfstütze mit den Merkmalen des Oberbegriffs des Patentanspruchs 1 wird diese Aufgabe dadurch gelöst, daß Stützrahmen und Halter aus Leichtmetall gefertigt sind, daß der Polsterkörper lösbar mit dem Stützrahmen verbunden ist und an diesem nicht haftet, und daß der Halter ein Hohlprofil mit länglichem Querschnitt ist.

Erfindungsgemäß sind alle tragenden Teile dieser Kopfstütze aus einem Leichtmetall gefertigt, darüberhinaus besteht die erfindungsgemäße Kopfstütze nur noch aus dem Polsterkörper. Dieser überspannt den Stützrahmen und ist nach Aufreißen leicht abzuziehen. Daneben sollen keine weiteren Werkstoffe eingesetzt werden, worunter zu verstehen ist, daß zusätzliche Werkstoffe, wie z. B. Kunststoffringe oder dergleichen, weniger als 5 %, vorzugsweise weniger als 1 % des Gesamtvolumens der Kopfstütze ausmachen sollten. Angestrebt und möglich im Rahmen der Erfindung ist aber ein vollständiger Verzicht auf derartige zusätzliche Bauteile, die nicht aus Leichtmetall hergestellt sind bzw. nicht Bestandteil des leicht abreißbaren Polsterkörpers sind.

Unter Leichtmetall werden im Sinne dieser Erfindung verstanden Aluminium, Magnesium und eine Legierung, deren Hauptbestandteil Aluminium und/oder Magnesium ist. Erfindungsgemäß wird also in bekannter Weise das geringe spezifische Gewicht dieser Legierung ausgenutzt, um das Gesamtgewicht der Kopfstütze gering halten zu können. Die erfindungsgemäße Kopfstütze ist dabei so ausgelegt, daß sie unter Berücksichtigung der Flächenträgheitsmomente, insbesondere desfenigen der Stütze, und der Festigkeit des Leichtmetalls dieselbe mechanische Festigkeit hat, wie bislang hauptsächlich aus Stahl gefertigten Kopfstützen, insbesondere aber die aus Stahl gefertigten Halter.

Der Stützrahmen und der Halter sind aus Bestandteilen aufgebaut, die vorzugsweise aus demselben Leichtmetall gefertigt sind. Dies ermöglicht es, die Kopfstütze nach Abreißen des Polsterkörpers einem Recycling zuzuführen, ohne daß eine weitere Demontage notwendig ist. Im Rahmen einer verschlechterten Ausführung können geringfügig unterschiedliche Legierungen für einzelne Bestandteile des Stützrahmens und/oder des Halters eingesetzt werden, solange sichergestellt ist, daß nach Abreißen des Polsterkörpers die verbliebenen metallischen Teile der Kopfstütze ohne weitere Demontage durch Wiederaufschmelzen weiterverarbeitbar sind.

Zum geringen Gesamtgewicht der erfindungsgemäßen Kopfstütze trägt schließlich der als Hohlprofil ausgebildete Halter bei. Er ist in an sich bekannter Weise einbeinig, auch hierdurch wird Gewicht eingespart. Er hat in vorzugsweiser Weiterbildung ein im wesentlichen längliches Profil, die längeren Profilabmessungen verlaufen parallel zur Schwenkachse der Gelenkverbindung zwischen Kopfteil und Halter. Die kürzeren Querschnittsabmessungen sind so berechnet, daß sie die für den Halter notwendige Festigkeit in Abstützrichtung geben können.

Insgesamt ist die Kopfstütze nach der Erfindung somit einerseits konsequent auf möglichst geringes Gewicht ausgelegt, andererseits ist sie für ein Recycling besonders geeignet, bei der Entsorgung eines Kraftfahrzeugs genügt es, die erfindungsgemäße Kopfstütze aus der Rückenlehne herauszuziehen, den Polsterkörper durch Aufschneiden oder Aufreißen abzuziehen und die dann übrig bleibenden Leichtmetallteile, die miteinander zusammenhängen, einzuschmelzen.

In bevorzugter Weiterbildung der Erfindung besteht der Stützrahmen aus einer einstückigen Schale und einer mit dieser verbundenen Achse aus Vollmaterial. In der Schale können Aussparungen zur weiteren Gewichtsverminderung vorgesehen sein. Vorzugsweise erhält die Schale ihre Stabilität durch einen umlaufenden, umgebördelten Rand. Die Schale hat vorzugsweise zwei Löcher, durch die die Endbereiche der Achse hindurchgreifen, die Endbereiche der Achse selbst sind mit der Schale verbunden, beispielsweise durch Schweißen oder Vernieten, wobei als Niet ein Leichtmetallniet des Leichtmetalls eingesetzt wird, das auch für die anderen Teile verwendet wird.

Der Halter ist vorzugsweise ein Rechteckprofil, dessen Hohlraum in einer weiteren Verbesserung durch Zwischenstege, die quer zur Achse der Gelenkverbindung zwischen Kopfteil und Halter verlaufen, in einzelne Kammern unterteilt ist. Hierdurch wird die mechanische Stabilität des Halters bei unfallbedingten Belastungen erhöht. Die Längsabmessungen in Richtung der genannten Schwenkachse ist so bemessen, daß die Kopfstütze die notwendige Seitenstabilität (Verdrehung gegenüber der Rückenlehne) aufweist. Das Rechteckprofil hat mindestens in Seitenverhältnis von 1 zu 3, vorzugsweise ein Seitenverhältnis von 1 zu 5.

In einer besonders vorteilhaften Weiterbildung ist die lichte Innenweite des Rechteckprofils dem Außendurchmesser der Achse angepaßt. Dabei ist die Achse in eine zum freien Ende des Halters hin offene Aussparung des Rechteckprofils oder ein Durchgangsloch im Rechteckprofil eingesetzt.

In besonders vorteilhafter Weiterbildung wird der für die Einstellung der Schwenkzustände zwischen Kopfteil und Halter notwendige Reibschluß durch einen Leichtmetallniet (Bundniet) erzielt, der im Abstand von den seitlichen Stegen und eventuellen Zwischenstegen die parallel zur genannten Schwenkachse verlaufenden Hauptstege des Rechteckprofils zusammenzieht und dadurch die zwischengelagerte Achse klemmt. Dabei ist es besonders vorteilhaft, wenn die Achse einen umlaufenden Hals (Kehlung) aufweist, in die der Niet eingreift, so daß die Achse nicht seitlich gegenüber dem Halter verschiebbar ist.

Der Halter kann Vorsprünge oder Aussparungen für eine Rastverbindung mit einer Aufnahmevorrichtung in der Rückenlehne des Kraftfahrzeugsitzes haben. Dadurch kann die Höhe des Kopfteils gegenüber der Oberkante der Rückenlehne in definierten Positionen eingestellt werden. Es ist aber auch ein motorischer oder manueller Antrieb des Halters gegenüber der Rückenlehne möglich, in diesem Fall sind Einrastbereiche am Halter nicht notwendig.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: eine Vorderansicht (von der Benutzerseite) auf eine Kopfstütze ohne Polsterkörper und
- Fig. 2: ein Schnittbild entlang der Schnittlinie II - II in Fig. 1.

Die in den Figuren abgebildete Kopfstütze für einen Kraftfahrzeugsitz hat ein Kopfteil, von dem in den Figuren nur der Stützrahmen 20 dargestellt ist. Dieser besteht aus einer Schale 22 und einer Achse 24 aus Vollmaterial. Der nicht dargestellte Polsterkörper umgreift diesen Stützrahmen 20, ohne an ihm zu haften. Anders ausgedrückt ist der Stützrahmen nachträglich beziehbar.

Die Schale 22 ist einstückig aus einem Leichtmetallblech im Tiefziehverfahren hergestellt, sie hat im wesentlichen die Form eines gleichschenkligen Trapezes mit abgerundeten Ecken. Die Schale 22 hat einen umlaufenden, aussteifenden und bogenförmig gekrümmten Rand 26 und eine Ausbauchung 28 im Mittelbereich, letztere springt in gleicher Richtung vor wie der Rand 26. Die Ausbauchung 28 hat zwei Seitenflächen 30, in jeder ist ein Durchlaß 32 für die Achse 24 vorgesehen. Die Achse 24 ist etwa 35 % länger als der Abstand der beiden Durchlässe 32, die Endbereiche der Achse 24 sind abgeflacht, beispielsweise durch Breitdrücken, und jeweils mit einem Niet 34 mit der Schale 22 verbunden.

Der Halter 36 besteht aus einem Hohlprofil 38 in Form eines Rechteckhohlprofils (Fließpreßprofil) und einem Bundniet 40. Das Hohlprofil 38 hat zwei Seitenstege 42 und zwei parallel zur Achse 24 verlaufende Hauptstege 44. Das Seitenverhältnis der Seitenstege 42 zu den Hauptstegen 44 beträgt 1 zu 5. In einer konkreten Ausführung hat das Hohlprofil 38 zwei Millimeter Wandstärke, diegleiche Wandstärke weist auch der ursprüngliche Zuschnitt der Schale 22 auf. Die Achse 24 hat einen Durchmesser von 8 mm, das gleiche Maß liegt als lichter Abstand zwischen den beiden Hauptstegen 44 vor.

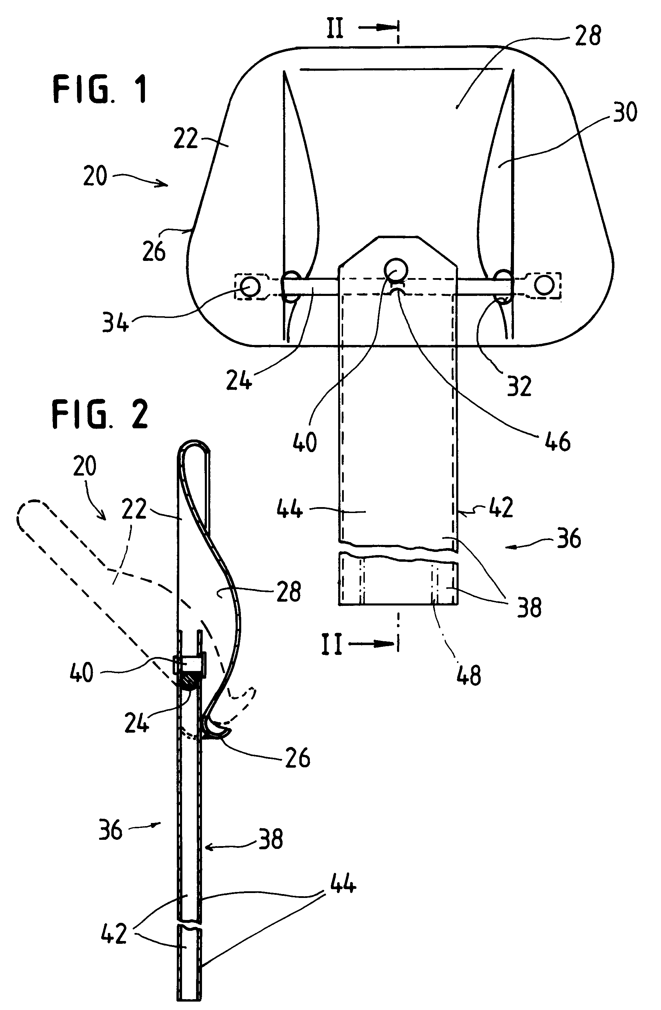

Wie aus den Figuren ersichtlich ist, ist das Hohlprofil 38 am oberen freien Ende abgeschrägt, es kann dort auch abgerundet sein. Wie insbesondere aus Fig. 2 ersichtlich ist, sind die Seitenstege 42 vom oberen, freien Ende des Hohlprofils 38 ausgehend soweit nach unten entfernt, daß die Achse 24 von oben in das Hohlprofil 38 eingelegt werden kann und dabei die in den Figuren gezeigte Position einnimmt. Die Achse 24 wird nun einerseits nach oben hin fixiert durch den Bundniet 40, der so eng an ihr anliegt, daß sie klapperfrei gehalten wird, andererseits wird die Achse 24 auch durch diesen Bundniet eingespannt, er hat Abmessungen, die so gewählt sind, daß die Hauptstege 44 geringfügig aufeinanderzu gezogen werden, so daß die Achse 24 reibschlüssig festliegt.

Um eine Seitenverschiebung der Achse 24 gegenüber dem Bundniet 40 auszuschließen, ist in der Achse ein dem Bundniet 40 angepaßter Hals 46 (Kehlung) ausgebildet. In ihn greift der Bundniet wenige Millimeter bei flächiger Anlage ein.

In einer anderen Ausführung kann eine Funktion des Bundniets 40 auch durch ein anderes Teil oder eine andere Konstruktion ersetzt werden. Beispielsweise ist es möglich, die Seitenstege 40 nicht zum freien, oberen Ende hin offen auszuführen, sondern in den Seitenstegen 42 ein Durchgangsloch von beispielsweise 8 mm für die Achse 24 vorzusehen. Dann kann der Bundniet 40 in einer Entfernung von der Achse 24 vorgesehen sein und nur noch die Funktion eines Zusammenpressens der Hauptstege 44 gegeneinander, also die Funktion der elastischen Vorspannung, übernehmen. Es ist auch möglich, weitere Niete vorzusehen, beispielsweise auch unterhalb der Achse 24, um die elastische Vorspannung zu vergrößern. Schließlich ist es in einer geänderten Ausbildung möglich, ein dünnes Kunststoffteil zwischen Achse 24 und Hohlprofil 38 vorzusehen, um den Reibschluß zu verbessern.

Schließlich ist auch der Bundniet selbst nicht zwangsnotwendig, es können z. B. auch die oberen freien Enden der Hauptstege zusammengedrückt und durch Schweißen verbunden werden.

Im Hohlprofil 38 können Zwischenstege 48 vorgesehen sein, die die Steifigkeit des bei unfallbedingter Situation in seiner Flachrichtung belasteten Halters 36 erhöhen, derartige Zwischenstege 48 sind in Fig. 1 strichpunktiert mit 48 angedeutet. In der Schale 22 können Ausnehmungen vorgesehen sein, um ihr Gewicht weiter zu verringern. Derartige Aussparungen soll aber der Polsterkörper nicht teilweise durchgreifen, vielmehr umgreift der Polsterkörper lediglich den Rand 26 und ist durch diesen Umgriff mit dem Stützrahmen 20 verbunden. Dadurch ist nur ein lokales Aufreißen des Polsterkörpers notwendig, um ihn vom Stützrahmen 20 abzuziehen. Auch im Halter 36 können Aussparungen im Bereich der Hauptstege 44 vorgesehen sein.

Wie Fig. 2 zeigt, ist der maximale Verstellwinkel des Stützrahmens 20 gegenüber dem Halter 36 etwa 45°. Für die praktische Ausführung wird eine Al-Legierung F27 mit 270 N/mm² Festigkeit verwendet.

## Patentansprüche

1. Kopfstütze für einen Kraftfahrzeugsitz, die aus einem Kopfteil, das einen Stützrahmen (20) und einen Polsterkörper aufweist, und einem einbeinigen, steckbaren, gelenkig mit diesem Kopfteil verbundenen, in die Rückenlehne einsteckbaren Halter (36) besteht, dadurch gekennzeichnet, daß Stützrahmen (20) und Halter (36) aus Leichtmetall gefertigt sind, daß der Polsterkörper lösbar mit dem Stützrahmen (20) verbunden ist und an diesem nicht haftet, und daß der Halter (36) ein Hohlprofil mit länglichem Querschnitt ist.

2. Kopfstütze nach Anspruch 1, dadurch gekennzeichnet, daß alle Teile der Kopfstütze mit Ausnahme des Polsterkörpers aus demselben Leichtmetall gefertigt sind.

3. Kopfstütze nach Anspruch 1, dadurch gekennzeichnet, daß der Stützrahmen (20) aus einer Schale (22), die einen Rand (26) aufweist, und einer mit dieser starr verbundenen Achse (24) aufgebaut ist.

4. Kopfstütze nach Anspruch 1, dadurch gekennzeichnet, daß der Halter (36) als Hohlprofil (38) ein Rechteckprofil mit einem Seitenverhältnis von mindestens 1 zu 3, vorzugsweise 1 zu 5 aufweist.

5. Kopfstütze nach Anspruch 4, dadurch gekennzeichnet, daß die lichte Innenweite des Rechteckprofils (38) dem Außendurchmesser der Achse (34) angepaßt ist.

6. Kopfstütze nach Anspruch 4, dadurch gekennzeichnet, daß das Rechteckprofil (38) zur Aufnahme der Achse nach oben offene Ausnehmungen im Bereich der Seitenstege (52) aufweist.

7. Kopfstütze nach Anspruch 1, dadurch gekennzeichnet, daß der Halter (36) einen Niet (40) aufweist, der aus demselben Material wie das Hohlprofil (38) gefertigt ist und der zwischen den Hauptstegen (44) des Hohlprofils (38) unter elastischer Vorspannung fixiert ist und durch den vorzugsweise die Achse (24) positioniert ist.

8. Kopfstütze nach Anspruch 7, dadurch gekennzeichnet, daß die Achse einen Hals (46) aufweist, in die der Niet (40) teilweise eingreift.

9. Kopfstütze nach Anspruch 1, dadurch gekennzeichnet, daß die Achse (24) aus Vollmaterial gefertigt ist.

10. Kopfstütze nach Anspruch 1, dadurch gekennzeichnet, daß das Hohlprofil (38) Zwischenstege (48) aufweist.
